# EUROPEAN PATENT SPECIFICATION

(11) **EP 3 504 281 B1**
(45) Date of publication and mention of the grant of the patent: **01.09.2021**
(21) Application number: 17893869.2
(22) Date of filing: 30.01.2017
(51) Int. Cl.: C09D 11/322, C09D 11/40, B41J 2/01, C09D 11/102, C09D 11/106, C09D 11/107, C09D 11/326

(54) **GREEN INKS**
GRÜNE TINTEN
ENCRES VERTES

(43) Date of publication of application: 03.07.2019
(73) Proprietor: Hewlett-Packard Development Company, L.P., Spring, TX 77389 (US)
(72) Inventor: GUO, Dennis Z., San Diego, California 92127-1899 (US); ZHENG, Jie, San Diego, California 92127-1899 (US); SARKISIAN, George, San Diego, CA 92127-1899 (US); RAHIMI, Alireza, San Diego, CA 92127-1899 (US); TSAO, Yi-hua, San Diego, CA 92127-1899 (US)
(74) Representative: Plasseraud IP
(86) International application number: PCT/US2017/015600
(87) International publication number: WO 2018/140054

(56) References cited:
- EP-A1- 0 933 406
- WO-A1-2015/112129
- WO-A1-2018/017305
- WO-A1-2018/017307
- JP-A- 2010 106 161
- US-A1- 2005 284 329

## Description

### BACKGROUND

There are several reasons that inkjet printing has become a popular way of recording images on various media surfaces, particularly paper. Some of these reasons include low printer noise, capability of high-speed recording, and multi-color recording. Additionally, these advantages can be obtained at a relatively low price to consumers. Though there has been great improvement in inkjet printing, accompanying this improvement are increased demands by consumers, e.g., higher speeds, higher resolution, full color image formation, increased stability, large format printing, etc.

### BRIEF DESCRIPTION OF THE DRAWINGS

FIG. 1A is an example graph illustrating color gamut volume of a KCMY ink set as compared to color gamut volume of a KCMY + green ink set on a coated print medium in accordance with the present disclosure.
FIG. 1B is an example graph illustrating color gamut volume of a KCMY ink set as compared to color gamut volume of a KCMY + green ink set on a coated print medium in accordance with the present disclosure.
FIG. 1C is an example graph illustrating color gamut volume of a KCMY ink set as compared to color gamut volume of a KCMY + green ink set on a coated print medium in accordance with the present disclosure.
FIG. 2A is an example graph illustrating color gamut volume of a KCMY ink set as compared to color gamut volume of a KCMY + green ink set on an uncoated print medium in accordance with the present disclosure.
FIG. 2B is an example graph illustrating color gamut volume of a KCMY ink set as compared to color gamut volume of a KCMY + green ink set on an uncoated print medium in accordance with the present disclosure.
FIG. 2C is an example graph illustrating color gamut volume of a KCMY ink set as compared to color gamut volume of a KCMY + green ink set on an uncoated print medium in accordance with the present disclosure.
FIG. 3 is a flowchart illustrating an example method of manufacturing a green ink in accordance with examples of the present disclosure.

### DETAILED DESCRIPTION

**The** present disclosure is drawn to green inkjet inks, methods of manufacturing green inkjet inks, and ink sets including green inkjet inks. A green ink can be added to an ink set to increase the color gamut volume of the ink set. The color gamut of a particular ink set refers to the subset of colors that can be accurately represented or expressed by the combination of inks in the ink set. Thus, a particular black, cyan, magenta, and yellow (KCMY) ink set has a defined color gamut volume that may be able to be increased by adding additional colors to the ink set, such as a green ink, for example.

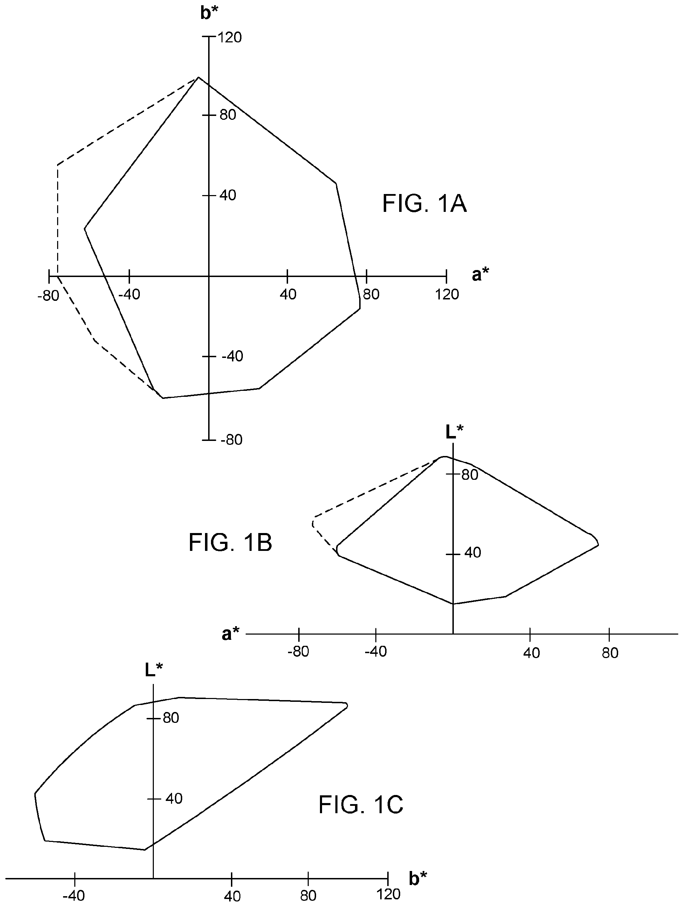

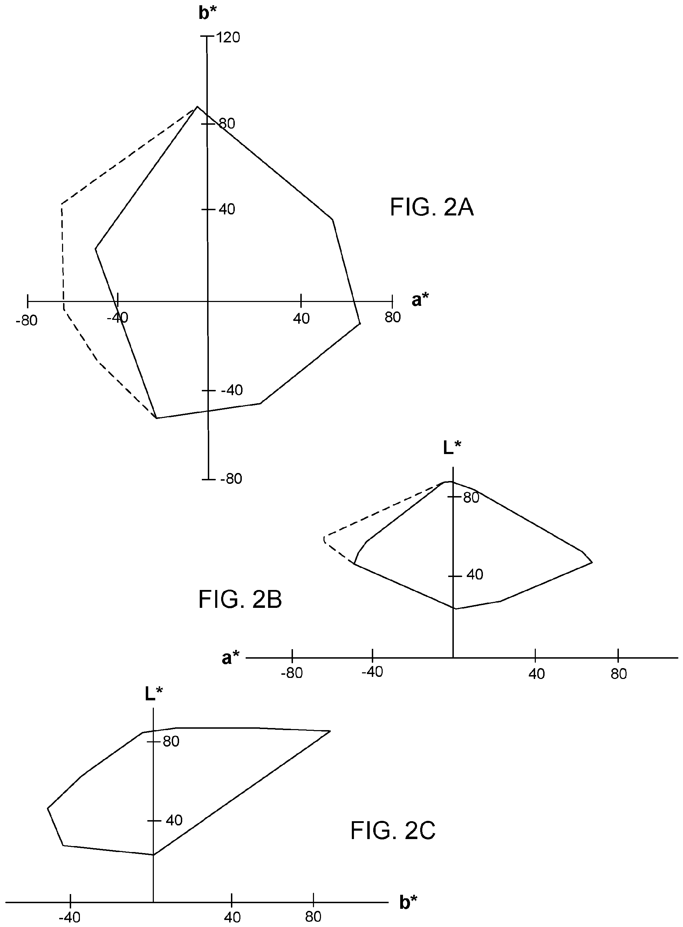

**The** color gamut expansion by adding a green ink to a KCMY ink set is illustrated, for example, in FIGs. 1A-1C (for coated media) and in FIGs. 2A-2C (for uncoated media), which represent the CIE L*a*b* color space in the projection onto a b* vs. a* plane (FIGs. 1A and 2A), L* vs. a* plane (FIGs. 1B and 2B), and L* vs. b* plane (FIGs. 1CA and 2C). In these FIGs., the color gamut for the KCMY ink set is shown as a solid line, and the color gamut for the KCMY + Green ink set is shown by addition using a dashed line (solid line + dashed line showing increased volume). Coated and uncoated print media are both tested and shown, respectively. The three coordinates of the CIE L*a*b* color space represent the lightness of the color (L*), which can be positive between red and green (a*) and positive between yellow and blue (b*). For example, for the L* axis, L* = 0 indicates black and L* = 100 indicates diffuse white. For the a* axis, positive values indicate red and negative values indicate green. For the b* axis, positive values indicate yellow and negative values indicate blue. As illustrated, the color gamut volume of the KCMY + Green ink set is larger than that of the KCMY ink set alone.

A green ink can be prepared that provides this relatively large gamut increase in accordance with the formulations, methods, and inks sets described herein. In one example, a green ink can include a green pigment in an amount of from about 1.5 wt% to about 6 wt%, a styrene acrylic polymer having a weight average molecular weight (Mw) from about 3,000 to about 30,000, a polyurethane having a weight average molecular weight (Mw) from about 15,000 to about 120,000, wherein said polyurethane is present in an amount from 3 wt % to 10 wt%, an organic co-solvent, and water in an amount from about 50 wt% to about 90 wt%. In some examples, the green pigment can have an average particle size from 60 nm to 160 nm. The styrene acrylic polymer can be present at various concentrations, but in one example, the green pigment and the styrene acrylic polymer can be present at a weight ratio of from 1:1 to 10:1. In one example, the styrene acrylic polymer can have an acid number from 120 to 300. The polyurethane can also be present at various concentrations, but it is present from 3 wt% to 10 wt%. The green ink can further include other additives, such as a surfactant, a pH adjuster or buffer, an anti-kogation agent, a biocide, or combinations thereof.

In further detail, with respect to the green pigment, a variety of suitable green pigments can be used. Non-limiting examples can include Pigment Green 1, Pigment Green 2, Pigment Green 4, Pigment Green 7, Pigment Green 8, Pigment Green 10, Pigment Green 36, Pigment Green 45, or combinations thereof. In one specific example, the green pigment can be Pigment Green 7, which seems to increase the color gamut of the KCMY ink sets described herein the most.

Pigment Green 7 has a molecular formula of C₃₂H₁₆₋ₓClₓCuN₈, where x can be an integer from 12-16. In one example, x can be 16. Pigment Green 7 can have a structure as follows:

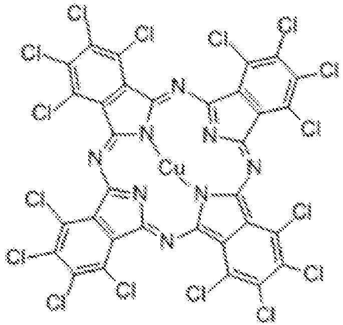

In some examples, a green ink formulated with Pigment Green 7 can include a reduced amount of green pigment as compared to a green ink formulated with a different green pigment, such as Pigment Green 36, and still equivalently increase the color gamut volume of a KCMY ink set as compared to the green ink formulated with the different green pigment. In some examples, this reduced pigment loading can also provide ink formulations with improved decap performance and decreased pigment settlement as compared to a green ink formulated with a different green pigment with similar color gamut volume, such as Pigment Green 36, which typically requires more pigment to approximate similar color gamut volume compared to the Pigment Green 7.

In further examples, the green pigment can have an average particle size from about 60 nm to about 160 nm. In other examples, the green pigment can have an average particle size from about 80 nm to about 120 nm. In yet other examples, the green pigment can have an average particle size from about 90 nm to about 110 nm.

Typically, the green pigment can be present in the green ink at a concentration from about 1.5 wt% to about 6 wt%. In other examples, the green pigment can be present in the green ink in an amount from about 2 wt% to about 5 wt%, or from about 3 wt% to about 4 wt%.

As mentioned, a styrene acrylic polymer can be included, as it assists in dispersing the green pigment in the ink vehicle. A variety of styrene acrylic polymers can be used in the green ink. Some non-limiting commercial examples of useful styrene acrylic polymers are sold under the trade names Joncryl® (S.C. Johnson Co.), Ucar™ (Dow Chemical Co.), Jonrez® (MeadWestvaco Corp.), and Vancryl® (Air Products and Chemicals, Inc.).

In further detail, the styrene acrylic polymer can be formulated with a variety of monomers, such as hydrophilic monomers, hydrophobic monomers, etc. Non-limiting examples of hydrophilic monomers that can be co-polymerized together to form the styrene acrylic polymer include acrylic acid, methacrylic acid, ethacrylic acid, dimethylacrylic acid, maleic anhydride, maleic acid, vinylsulfonate, cyanoacrylic acid, vinylacetic acid, allylacetic acid, ethylidineacetic acid, propylidineacetic acid, crotonoic acid, fumaric acid, itaconic acid, sorbic acid, angelic acid, cinnamic acid, styrylacrylic acid, citraconic acid, glutaconic acid, aconitic acid, phenylacrylic acid, acryloxypropionic acid, aconitic acid, phenylacrylic acid, acryloxypropionic acid, vinylbenzoic acid, N- vinylsuccinamidic acid, mesaconic acid, methacroylalanine, acryloylhydroxyglycine, sulfoethyl methacrylic acid, sulfopropyl acrylic acid, styrene sulfonic acid, sulfoethylacrylic acid, 2-methacryloyloxymethane-1-sulfonic acid, 3-methacryoyloxypropane-1-sulfonic acid, 3-(vinyloxy)propane-1-sulfonic acid, ethylenesulfonic acid, vinyl sulfuric acid, 4-vinylphenyl sulfuric acid, ethylene phosphonic acid, vinyl phosphoric acid, vinyl benzoic acid, 2-acrylamido-2-methyl-1-propanesulfonic acid, the like, or combinations thereof.

Non-limiting examples of hydrophobic monomers that can be used include styrene, p-methyl styrene, methyl methacrylate, hexyl acrylate, hexyl methacrylate, butyl acrylate, butyl methacrylate, ethyl acrylate, ethyl methacrylate, propyl acrylate, propyl methacrylate, octadecyl acrylate, octadecyl methacrylate, stearyl methacrylate, vinylbenzyl chloride, isobornyl acrylate, tetrahydrofurfuryl acrylate, 2-phenoxyethyl methacrylate, ethoxylated nonyl phenol methacrylate, isobornyl methacrylate, cyclohexyl methacrylate, t-butyl methacrylate, n-octyl methacrylate, lauryl methacrylate, trydecyl methacrylate, alkoxylated tetrahydrofurfuryl acrylate, isodecyl acrylate, isobornylmethacrylate, the like, or combinations thereof.

Typically, the styrene acrylic polymer can have a weight average molecular weight (Mw) from about 3,000 to about 30,000. In yet other examples, the styrene acrylic polymer can have an Mw from about 10,000 to about 25,000, or from about 15,000 to about 20,000. It is noted that molecular weights of polymers will be periodically referred to throughout the current disclosure. In each instance where molecular weight is used, it is to be understood that this refers to weight average molecular weight.

Further, in some examples, the styrene acrylic polymer can have an acid number or acid value from about 120 to about 300. In yet other examples, the styrene acrylic polymer can have an acid number from about 140 to about 260, from about 160 to about 240, or from about 205 to about 230. An acid number can be defined as the number of milligrams of potassium hydroxide required to neutralize 1 gram of the substance.

In some examples, the amount of styrene acrylic polymer in the green ink can be based on the amount of green pigment. Thus, in some examples, the green pigment and the styrene acrylic polymer can be present in the green ink at a particular weight ratio. In some specific examples, the green pigment and styrene acrylic polymer can be present at a weight ratio of from 1:1 to 10:1. In other examples, the green pigment and the styrene acrylic polymer can be present at a weight ratio of from about 2:1 to about 10:1. In yet other examples, the green pigment and the styrene acrylic polymer can be present at a weight ratio of from about 3:1 to about 6:1.

Also as mentioned, a polyurethane polymer can also be included to help improve the durability of the green ink. In some examples, the polyurethane polymer can act as a binder to help bind the green pigment particles together. A variety of polyurethane polymers can be used in the green ink. For example, the polyurethane can be a reaction product of a polyisocyanate having at least two isocyanate (—NCO) functionalities per molecule with, at least, one isocyanate-reactive group, such as a polyol, having at least two hydroxy groups or an amine. Suitable polyisocyanates can include diisocyanate monomers and oligomers.

In some examples, the polyurethane can be a vinyl-urethane hybrid polymer or an acrylic-urethane hybrid polymer. In still other examples, the polyurethane can be an aliphatic polyurethane-acrylic hybrid polymer.

In some examples, the polyurethane can include a modified or unmodified polymeric core of either polyurethane or a copolymer that includes polyurethane. Suitable polyurethanes can include aliphatic as well as aromatic polyurethanes.

In another example, the polyurethane can include an aromatic polyether polyurethane, an aliphatic polyether polyurethane, an aromatic polyester polyurethane, an aliphatic polyester polyurethane, an aromatic polycaprolactam polyurethane, an aliphatic polycaprolactam polyurethane, or a combination thereof. In a more specific example, the polyurethane can include an aromatic polyether polyurethane, an aliphatic polyether polyurethane, an aromatic polyester polyurethane, an aliphatic polyester polyurethane, and a combination thereof.

The polyurethane polymer can typically have a weight average molecular weight (Mw) from about 15,000 to about 120,000. In some examples, the polyurethane polymer can have an Mw of about 18,000 to about 40,000 or from about 18,000 to about 60,000.

Further, the polyurethane polymer is present in the green ink in an amount from 3 wt% to 10 wt%. In yet other examples, the polyurethane can be present in an amount from about 3 wt% to about 8 wt%, or from about 3 wt% to about 7 wt%.

The green ink can also include a variety of organic co-solvents for use, including water and water soluble or water miscible organic co-solvents. The water can be present in an amount from 50 wt% to about 90 wt%. In other examples, the green ink can include from about 60 wt% to about 88 wt% water. In further examples, the green ink can include from about 70 wt% to about 85 wt% water.

Non-limiting examples of organic co-solvents can include aliphatic alcohols, aromatic alcohols, diols, triols, glycol ethers, poly(glycol) ethers, lactams, formamides, acetamides, long chain alcohols, ethylene glycol, propylene glycol, diethylene glycols, triethylene glycols, glycerine, dipropylene glycols, glycol butyl ethers, polyethylene glycols, polypropylene glycols, amides, ethers, carboxylic acids, esters, organosulfides, organosulfoxides, sulfones, alcohol derivatives, carbitol, butyl carbitol, cellosolve, ether derivatives, amino alcohols, and ketones. For example, co-solvents can include primary aliphatic alcohols of 30 carbons or less, primary aromatic alcohols of 30 carbons or less, secondary aliphatic alcohols of 30 carbons or less, secondary aromatic alcohols of 30 carbons or less, 1,2-diols of 30 carbons or less, 1,3-diols of 30 carbons or less, 1,5-diols of 30 carbons or less, ethylene glycol alkyl ethers, propylene glycol alkyl ethers, poly(ethylene glycol) alkyl ethers, higher homologs of poly(ethylene glycol) alkyl ethers, polypropylene glycol) alkyl ethers, higher homologs of poly(propylene glycol) alkyl ethers, lactams, substituted formamides, unsubstituted formamides, substituted acetamides, and unsubstituted acetamides. Specific examples of certain co-solvents that may likewise be used include, but are not limited to, hydantoin glycol (such as, e.g., 1,3-bis-(2-hydroxyethyl)-5,5-dimethylhydantoin), 1,(2-hydroxyethyl)-2-pyrrolidinone, 1-(2-hydroxyethyl)-2-imidazolidinone, tetratethylene glycol, 1,2,6-hexanetriol, glycerol, glycerol propoxylate, 1,5-pentanediol, LIONIC™ ethoxylated glycerol 1 (LEG-1), LIPONIC™ ethoxylated glycerol 7 (LEG-7), 2-methyl-2,4-pentanediol, 2-methyl-1,3-propanediol, 2-ethyl-2-hydroxymethyl-1,3-propanediol, diethylene glycol, 3-methoxybutanol, propylene glycol monobutyl ether, 1,3-dimethyl-2-imidazolidinone, the like, or combinations thereof. Co-solvents can be added to reduce the rate of evaporation of water in the inkjet ink, to minimize clogging, or provide other improved properties related to viscosity, pH, surface tension, optical density, gamut, durability, decap, and print quality, for example.

The organic co-solvent can typically be present in the green ink in an amount from about 3 wt% to about 25 wt%. In yet other examples, the organic co-solvent can be present in an amount from about 5 wt% to about 15 wt%, or from about 7 wt% to about 13 wt%.

As previously discussed, in some examples, the green ink can include a number of additional components, such as a surfactant, an anti-kogation agent, an anti-decel agent, a pH adjuster or buffer, a biocide, or the like, or a combination thereof. Non-limiting examples of suitable surfactants can include a nonionic surfactant, an anionic surfactant, or a combination thereof. In one example, the surfactant can be a nonionic surfactant. Several commercially available nonionic surfactants that can be used in the formulation of the green ink can include ethoxylated alcohols such as those from the Tergitol^{®} series (e.g., Tergitol^{®} 15S30, or Tergitol^{®} 15S9), manufactured by Dow Chemical; surfactants from the Surfynol^{®} series (e.g. Surfynol^{®} 104, Surfynol^{®} 440 and Surfynol^{®} 465), and Dynol™ series (e.g. Dynol™ 360, Dynol™ 604, and Dynol™ 607) manufactured by Air Products and Chemicals, Inc.; fluorinated surfactants, such as those from the Zonyl^{®} family (e.g., Zonyl^{®} FSO and Zonyl^{®} FSN surfactants), manufactured by E.I. DuPont de Nemours and Company; alkoxylated surfactant such as Tego^{®} Wet 510 manufactured from Evonik; fluorinated PolyFox^{®} nonionic surfactants (e.g., PF159 nonionic surfactants), manufactured by Omnova; or combinations thereof.

Polysorbate surfactants can include Polysorbate 20 (or polyoxyethylene 20 sorbitan monolaurate), Polysorbate 40 (or polyoxyethylene 20 sorbitan monopalmitate), Polysorbate 60 (or polyoxyethylene 20 sorbitan monostearate), Polysorbate 80 (or polyoxyethylene 20 sorbitan monooleate), or the like. However, not all of these polysorbates have at least 50 wt% lipophilic oleic acid groups and having an HLB value of less than 15. Brand names for these polysorbate surfactants include those sold under the tradename Tween® or Alkest®. Regarding the nomenclature of these polysorbates, the number "20" following "polyoxyethylene" refers to the total number of oxyethylene - (CH₂CH₂O)- groups found in the molecule. The number 20, 40, 60, or 80 following "polysorbate" is related to the type of fatty acid associated with the polyoxyethylene sorbitan portion. Monolaurate is indicated by 20, monopalmitate is indicated by 40, monostearate by 60 and monooleate by 80.

Other polysorbates can likewise be used, including Polysorbate 85, or Tween® 85, which is polyethylene glycol sorbitan trioleate; or Polysorbate 81, or Tween® 81, which is a polyoxyethylene (5) sorbitan monooleate. Tween® 85 and Tween® 81 are oleyl type compounds and include 70 wt% oleic acid. Polyoxyethylene sorbitan dioleate can also be used.

Another surfactant that can be used includes polyoxyethylene glycol ethers, including those having the base structure, as follows: CH₃(CH₂)ₙ(CH₂CH₂O)ₘH, where m can be from 2 to 100, but is typically from about 2 to about 20; and n can be from about 8 to 20. In one particular example, the polyoxyethylene glycol ether can have a tolerance of up to 1 "cis" unsaturated (oleyl) group, e.g., 0 or 1 "cis" group (which would reduce the total number of hydrogen atoms by 2 in the base structure described above, as a double bond would exist along the alkyl chain portion of the formula. Thus, oleyl type surfactants are included in this definition, even though they do not strictly fit within the above structural formulation, as the formulation is provided merely for convenience. Examples surfactants that can be used include Brij® S, Brij® O, Brij® C, and Brij® L type surfactants Synperonic surfactants can also be used. Specific examples include Brij® S10, Brij® S5, Brij®, S15, Brij® S20, Brij® S2/93, Brij® S7, Brij® 98/O20, Brij® O10, Brij® O2, Brij®, O3, Brij® O5, Brij® C2, Brij® C7, Brij® C10, Brij®, C20, Brij® L4/30, Brij® L9, Brij® L15, Synperonic® 91-2.5, Synperonic® 91-2.5, or Synperonic® 91-10, to name a few.

In some examples, the green ink can also include anti-kogation agent. The anti-kogation agent can be added to the green ink to reduce or prevent kogation, i.e., where ink residue builds up on surfaces of the heating element of the printer during printing. In some examples the anti-kogation agent can include a phosphate ester surfactant, such as surfactants that are commercially available under the tradename Emphos®, DeSophoS®, Hostaphat®, ESI-Terge®, Emulgen®, Crodafos®, Dephotrope®, and DePhOS®, which are available from Witco Corp. (Middlebury, Conn.), Clariant GmbH (Frankfurt, Germany), Cook Composites and Polymers Co., (Kansas City, Mo.), Kao Specialties Americas LLC (High Point, Nalco), Croda Inc. (Parsippany, N.J.), DeForest Enterprises, Inc. (Boca Raton, Fla.), and DeForest Enterprises, Inc. (Boca Raton, Fla.), respectively.

Other known additives can also be included, such as biocide for inhibiting growth of undesirable microorganisms. Several non-limiting examples of suitable biocides include benzoate salts, sorbate salts, and commercial products such as Nuosept®, Ucarcide®, Vancide®, Proxel® GXL, Anticide® B20 or M20, Kordex® MLX, for example. Typically, such biocides include less than about 5 wt% of the inkjet ink composition and often from about 0.05 wt% to about 2 wt%.

Any suitable pH adjuster can also be included. For example, pH adjusters can include both organic and inorganic acids and organic and inorganic bases. In some specific examples, the pH adjuster can include hydrochloric acid, phosphoric acid, sodium hydroxide, potassium hydroxide, the like, or combinations thereof. pH adjusters can also include pH buffers and any suitable pH buffer can be included in the green ink formulation. Non-limiting examples can include phosphate buffers, citrate buffers, phosphonate buffers, the like, or combinations thereof.

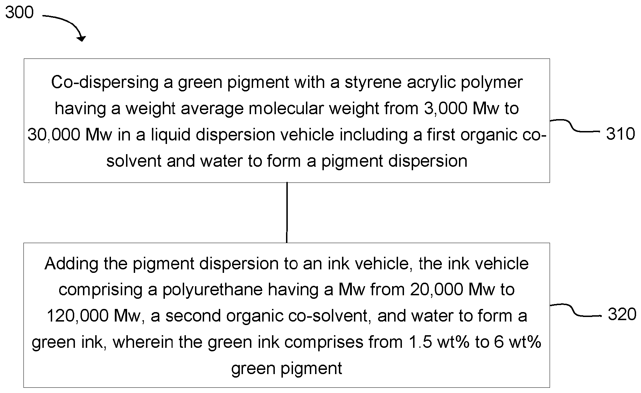

A method of manufacturing a green ink is also described herein. This is generally represented by the flow chart illustrated in FIG. 3. More specifically, FIG. 3 illustrates a method 300 of manufacturing a green ink. The method can include the step of co-dispersing 310 a green pigment with a styrene acrylic polymer having a weight average molecular weight from 3,000 to 30,000 in a liquid dispersion vehicle including a first organic co-solvent and water to form a pigment dispersion. An additional step can include adding 320 the pigment dispersion to an ink vehicle. The ink vehicle can include a polyurethane having a weight average molecular weight from 15,000 to 120,000, a second organic co-solvent, and water to form a green ink.

**The** green ink, when formed, can include from 1.5 wt% to 6 wt% green pigment. In this method, the green pigment and the first organic co-solvent can be present in the pigment dispersion at a weight ratio from 1:2 to 4:1, or 1:2 to 2:1. Likewise, the green pigment and the styrene acrylic polymer can be present in the pigment dispersion at a weight ratio from 1:1 to 10:1, or 2:1 to 5:1. The first organic co-solvent and the second organic co-solvent can be the same solvent, or they can be different co-solvents. Other steps can include milling the pigment dispersion prior to adding the pigment dispersion to the ink vehicle, and/or filtering the green ink. In some examples, filtering can be carried out prior to packaging using a filter with a pore size of about 0.3 microns to about 5 microns. Non-limiting examples of filter materials can include polyacrylic, polypropylene, or glass fiber, for example.

In some examples, the styrene acrylic polymer can be neutralized prior to adding the green pigment to the dispersion. A variety of pH adjusters/neutralizing agents can be used to neutralize the styrene acrylic polymer. Non-limiting examples can include an alkali hydroxide (e.g. potassium hydroxide, sodium hydroxide, lithium hydroxide, or the like, or combinations thereof), ammonium hydroxide, an organic amine, the like, or a combination thereof.

In some examples, the pigment dispersion can be milled prior to adding the pigment dispersion to the ink vehicle. In some examples, milling can be carried out by mixing the pigment dispersion with a rigid media and milling the mixture in high speed milling equipment until the particle size of the dispersion reaches a target value. In other examples, the pigment dispersion can be thoroughly mixed by a high shear mixer, but not milled, prior to adding the pigment dispersion to the ink vehicle. Where milling is used, milling can be performed using any suitable grinding mill. Suitable mills can include an airjet mill, a roller mill, a ball mill, an attritor mill, or a bead mill, for example. In some examples, the pigment dispersion can be milled to help achieve a desired green pigment particle size.

The pigment dispersion can be added to the ink vehicle in any suitable manner, including both batch and continuous manufacturing methods. The ink vehicle can include a variety of suitable components in addition to the polyurethane, second organic co-solvent, and water, such as those described above with respect to the green ink.

The green ink can also be included in an ink set. The ink set can include a green ink that includes a green pigment in an amount from 1.5 wt% to 6 wt%, a styrene acrylic polymer having a weight average molecular weight from 3,000 to 30,000, a polyurethane having a weight average molecular weight from 15,000 to 120,000, wherein said polyurethane is present in an amount from 3 wt% to 10 wt%, an organic co-solvent, and water in an amount from 50 wt% to 90 wt%. The ink set can further include additional inks, such as a cyan ink including a cyan pigment, a magenta ink including a magenta pigment, and a yellow ink including a yellow pigment. In some ink sets, there can also be a black ink including a black pigment. The color gamut volume of the ink set can be greater than an ink set without the green ink. For example, in some cases, the ink set including the green ink can have a color gamut volume that is 10% larger or more, 15% larger or more, or 20% larger or more as compared to a CMY or a KCMY ink set alone. Further, in some cases, the color gamut volume of the ink set can have a color gamut volume that is greater in both the green quadrant and the cyan quadrant as compared to a KCMY or CMY ink set without the green ink.

The cyan, magenta, and yellow inks (and black inks in some examples) can be formulated in any suitable manner. In some examples, the various inks can be formulated in the same, or similar, manner as described herein with respect to the green ink. Notably, other ink colors may also be present, including red ink, blue ink, orange ink, gray ink, etc.

As one non-limiting example of the yellow ink, the ink can include a dispersed yellow pigment in an ink vehicle for the yellow ink. In one example, the yellow pigment can be chosen from Pigment Yellow 74, Pigment Yellow 155, Pigment Yellow 213, Pigment Yellow 128, Pigment Yellow 185, Pigment Yellow 180, Pigment Yellow 150, Pigment Yellow 138, Pigment Yellow 181, Pigment Yellow 139, or combinations thereof.

As one non-limiting example of the cyan ink, the ink can include a dispersed cyan pigment in an ink vehicle for the cyan ink. In one example, the cyan pigment can be chosen from Pigment Blue 15:3, Pigment Blue 15:4, or a combination thereof.

As one non-limiting example of the magenta ink, the ink can include a dispersed magenta pigment in an ink vehicle for the magenta ink. In one example, the magenta pigment can be chosen from Pigment Red 282, Pigment Red 122, Pigment Red 150, Pigment Red 213, Pigment Red 269, Pigment Red 184, Pigment Red 202, Pigment Red 146, Pigment Violet 19, or co-crystal of two quinacridone magenta pigments.

As one non-limiting example of the black ink, the ink can include a dispersed black pigment in an ink vehicle for the black ink. In one example, the black pigment can be chosen from Black Pearls 700, 800, 880, 1100, 4350, 4750; Mogul L; Printex 75, 80, 85, 90, 95; Nipex 90, 150 IQ, 160 IQ, 180 IQ; Special Black 550; Nerox 305 and 3500.

It is noted that, as used in this disclosure, the singular forms "a," "an," and "the" include plural referents unless the context clearly dictates otherwise. Thus, for example, reference to "an inkjet ink" includes one or more of such inks, and reference to "the pigment" includes reference to one or more amounts of pigments.

As used herein, "liquid vehicle" or "ink vehicle" refers to the liquid fluid in which colorant is dispersed or dissolved to form an ink. Liquid vehicles include wide variety of liquid formulations and may be used in accordance with examples of the present disclosure. Such liquid vehicles may include a mixture of a variety of different agents, including without limitation, surfactants, organic co-solvents, buffers, biocides, viscosity modifiers, sequestering agents, stabilizing agents, and/or water. The liquid vehicle can also carry other additives such as latex particulates, binders, or other polymers, in some embodiments. In further detail, the term "ink vehicle" refers specifically to the vehicle that carries the green pigment to form the inks of the present disclosure. The term "liquid dispersion vehicle" refers the liquid vehicle that is used to disperse the green pigment, which is ultimately combined with other liquid (and solid) ingredients to generate the green ink.

As used herein, "ink" or "inkjet ink" refers to a single liquid vehicle that contains at least one pigment, and in accordance with embodiments of the present disclosure, the inks can also include certain more specific ingredients, including certain polymers and co-solvent. In one example, the inkjet ink can be a thermal inkjet ink.

As used herein, "pigment" refers to a colorant particle which is typically substantially insoluble in the liquid vehicle in which it is used. Pigments can be conventionally dispersed using a separate dispersing agent, or can be self-dispersed, having a dispersing agent attached to the surface of the pigment.

As used herein, "self-dispersed" generally refers to pigments that have been functionalized with a dispersing agent, such as by chemical attachment of the dispersing agent to the surface of the pigment. The dispersing agent can be a small molecule or a polymer or an oligomer. The dispersing agent can be attached to such pigments to terminate an outer surface of the pigment with a charge, thereby creating a repulsive nature that reduces agglomeration of pigment particles within the liquid vehicle.

As used herein, the term "about" is used to provide flexibility to a numerical range endpoint by providing that a given value may be "a little above" or "a little below" the endpoint. The degree of flexibility of this term can be dictated by the particular variable and would be within the knowledge of those skilled in the art to determine based on experience and the associated description herein.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary.

Concentrations, amounts, and other numerical data may be expressed or presented herein in a range format. It is to be understood that such a range format is used merely for convenience and brevity and thus should be interpreted flexibly to include not only the numerical values explicitly recited as the limits of the range, but also to include all the individual numerical values or sub-ranges encompassed within that range as if each numerical value and sub-range is explicitly recited. As an illustration, a numerical range of "about 1 wt% to about 5 wt%" should be interpreted to include not only the explicitly recited values of about 1 wt% to about 5 wt%, but also include individual values and sub-ranges within the indicated range. Thus, included in this numerical range are individual values such as 2, 3.5, and 4 and sub-ranges such as from 1-3, from 2-4, and from 3-5, etc. This same principle applies to ranges reciting only one numerical value. Furthermore, such an interpretation should apply regardless of the breadth of the range or the characteristics being described.

As a further note, in the present disclosure, it is noted that when discussing the green ink, methods of manufacturing green ink, and ink sets, each of these discussions can be considered applicable to each of these examples, whether or not they are explicitly discussed in the context of that example. Thus, for example, in discussing details about the green ink *per se*, such discussion also refers to the methods and the ink sets described herein, and *vice versa.*

### EXAMPLES

The following examples illustrate the embodiments of the disclosure that are presently best known. However, it is to be understood that the following are only exemplary or illustrative of the application of the principles of the present technology. Numerous modifications and alternative compositions and methods may be devised by those skilled in the art without departing from the spirit and scope of the present disclosure. The appended claims are intended to cover such modifications and arrangements.

### Example 1 - Green Ink Formulations

A pigment dispersion was prepared having the composition recited in Table 1:

**Table 1**

| Ingredient | Class | (wt%) |
|---|---|---|
| 1-(2-hydroxyethyl)-2-pyrrolidi none | Organic Co-solvent | 15 |
| Styrene Acrylic Polymer | Dispersant | 4.7 |
| Green Pigment | Pigment | 15 |
| Potassium Hydroxide | pH adjuster/Neutralizing Agent | 2.3 |
| Acticide® B20 from Thor | Biocide | 0.1 |
| Water | Solvent | Balance |

The pigment dispersion was added to an ink vehicle to prepare various green inks having a composition according to Table 2:

**Table 2**

| **Ingredient** | **Class** | **(wt%)** |
|---|---|---|
| Pigment Dispersion | Pigment Dispersion | Various* |
| 1-(2-hydroxyethyl)-2-pyrrolidi none | Organic Co-solvent | 5 |
| Crodafos® N3-Acid from Croda | Anti-Kogation | 0.5 |
| Dynol™ 360 from Air Products | Surfactant | 0.2 |
| Surfynol® 104 from Air Products | Surfactant | 0.2 |
| Acticide® B20 from Thor | Biocide | 0.10 |
| LEG-1 | Organic Co-Solvent/Anti-Decel | 1 |
| Polyurethane | Binder | 5 |
| Water | Solvent | Balance |

| | | |
|---|---|---|
| *Pigment Green 7 and Pigment Green 36 dispersions were prepared. An amount of green pigment was added to the ink so that a UV/vis absorbance of the ink was 0.095 at the lambda max when the ink was diluted with water by a factor of 10,000. The lambda max for pigment green 7 is about 645 nm. The lambda max for pigment green 36 is about 660 nm. The Pigment Green 7 ink included 3.5 wt% Pigment Green 7, and the Pigment Green 36 ink included 4.6 wt% Pigment Green 36. | | |

### Example 2 - Green Ink Performance

Various green inks were prepared as described in Example 1. For example, Pigment Green 7 and Pigment Green 36 were used to prepare green inks to compare various ink performance properties for the two inks, such as decap performance, pigment settlement, and ink kogation. Each of the ink formulations were prepared by adding the pigment dispersion to the ink vehicle until an equivalent UV/vis absorbance was achieved at a pre-determined wavelength. Thus, Pigment Green 36 included a greater concentration of pigment to achieve the equivalent UV/vis absorbance provided by a lower concentration of Pigment Green 7.

The pigment decap performance of the two inks is illustrated in Table 3:

**Table 3**

| **Pigment** | **Wt%** | **Sustained Decap Grade*** |
|---|---|---|
| Pigment Green 7 | 3.5 | 2 |
| Pigment Green 36 | 4.6 | 3 |

| | | |
|---|---|---|
| *Grade Range 1-16: 1=best, 16=worst | | |

As illustrated in Table 3, the green ink prepared with Pigment Green 7 had improved decap performance as compared to the green ink prepared with Pigment Green 36. In part, this may be due to a lower pigment loading required for Pigment Green 7 to achieve the same UV/vis absorbance as Pigment Green 36 in the ink vehicle.

The pigment density comparison Pigment Green 7 and Pigment Green 36 is presented in Table 4:

**Table 4**

| **Pigment** | **Wt%** | **Pigment Density (g/ml)** |
|---|---|---|
| Pigment Green 7 | 3.5 | 2.1 |
| Pigment Green 36 | 4.6 | 2.9 |

**The** green ink prepared with the Pigment Green 7 pigment also demonstrated improved pigment settlement properties as compared to the green ink prepared with Pigment Green 36. The combination of reduced pigment loading to achieve the same UV absorbance as the green ink based on Pigment Green 36 and the decreased pigment density as compared to Pigment Green 36 both indicated that the green ink prepared with Pigment Green 7 contributed to the pigment being less likely to settle out of the ink vehicle. This can provide increased reliability for inkjet inks.

The results for the ink kogation comparison are illustrated in Table 5 below. In this particular study, two different Pigment Green 7-based green inks were used to compare to the Pigment Green 36-based green ink. The green pigment dispersions were prepared by milling to an energy level of 400 kwh/t. Pen Life Stage (Million Drops Per Nozzle) was determined.

**Table 5**

| **Pen Life Stage (Million Drops Per Nozzle)** | **Drop Weight (ng)** | | |
|---|---|---|---|
| | **Pigment Green 7 (A)** | **Pigment Green 7 (B)** | **Pigment Green 36** |
| 0 | 5.95 | 6.24 | 4.11 |
| 1 | 6.29 | 6.34 | 4.53 |
| 10 | 6.32 | 6.53 | 4.77 |
| 50 | 6.17 | 6.27 | 5.34 |
| 100 | 6.11 | 6.06 | 5.41 |
| 200 | 5.93 | 6.12 | 5.32 |
| Drop Weight Change (max. to min.) | -6.2% | -7.2% | -24.0% |

**As** illustrated in the results depicted in Table 5, the green ink based on the Pigment Green 36 had lower drop weight and worse drop weight variation as compared to either of the green inks prepared with Pigment Green 7. These green inks were prepared as described in Example 1.

The kogation comparison was then repeated for the same ink formulations, but the green pigment dispersions were milled to a different energy level as compared to the green pigment dispersion in the ink formulations represented in Table 5. The green pigment dispersions were prepared by milling to an energy level of 200 kwh/t. These results are illustrated in Table 6:

**Table 6**

| **Pen Life Stage (Million drops per nozzle)** | **Drop Weight (ng)** | | |
|---|---|---|---|
| | **Pigment Green 7 (A)** | **Pigment Green 7 (B)** | **Pigment Green 36** |
| 0 | 6.16 | 6.00 | 4.95 |
| 1 | 6.43 | 6.31 | 5.27 |
| 10 | 6.29 | 6.39 | 5.55 |
| 50 | 6.28 | 6.32 | 5.50 |
| 100 | 6.14 | 6.33 | 5.83 |
| 200 | 6.18 | 6.09 | 5.59 |
| Drop Weight Change (max. to min.) | -4.5% | -6.1% | -15.1% |

While the lower energy milling tended to improve the overall kogation performance for each of the inks, the green inks prepared with Pigment Green 7 still exhibited superior kogation performance as compared to the green ink prepared with Pigment Green 36.

### Example 3 - Color Gamut Volume

A green ink formulated as described in Example 1 above with Pigment Green 7 was added to a KCMY ink set to compare color gamut volume of the KCMY ink set alone to the KCMY + Green (G) ink set. The comparison was performed on both coated and uncoated print media. The results of the study are illustrated in Table 7:

**Table 7**

| | **Coated Print Media** | | **Uncoated Print Media** | |
|---|---|---|---|---|
| | **Gamut Volume** | **% Change** | **Gamut Volume** | **% Change** |
| KCMY | 423K | | 249K | |
| KCMY+G | 517K | 22.2% | 305K | 22.5% |

**These** results are also represented graphically in FIGs. 1A-1C and FIGs. 2A-2C. For example, FIGs. 1A-1C illustrate an overall increase in color gamut volume for the KCMY+G ink set (solid line + dashed line) as compared to the KCMY ink set alone (solid line) on a coated print medium. In further detail, FIGs. 1A-1C represent the projection of the CIE L*a*b* color space in the b* *vs.* a* plane, L* *vs.* a* plane, and L* *vs.* b* plane, respectively. As illustrated in FIGs. 1A-1C, the addition of the green ink to the KCMY ink set can increase the color gamut in both the green and cyan quadrants on a coated print medium as compared to the KCMY ink set alone. Similarly, FIGs. 2A-2C illustrate an overall increase in color gamut volume for the KCMY+G ink set (solid line + dashed line) as compared to the KCMY ink set alone (solid line) on an uncoated print medium. As in FIGs. 1A-1C, FIGs. 2A-2C represent the projection of the CIE L*a*b* color space in the b* *vs.* a* plane, L* *vs.* a* plane, and L* *vs.* b* plane, respectively. As also illustrated in FIGs. 2A-2C, the addition of the green ink to the KCMY ink set can also increase the color gamut in both the green and cyan quadrants on an uncoated print medium as compared to the KCMY ink set alone.

## Claims

1. A green ink, comprising:
from 1.5 wt% to 6 wt% green pigment;
a styrene acrylic polymer having a weight average molecular weight from 3,000 to 30,000;
a polyurethane having a weight average molecular weight from 15,000 to 120,000, wherein said polyurethane is present in an amount from 3 wt% to 10 wt%;
an organic co-solvent; and
from 50 wt% to 90% water.

2. The green ink of claim 1, wherein the green pigment has an average particle size from 80 nm to 160 nm.

3. The green ink of claim 1, the green pigment is pigment green 7.

4. The green ink of claim 1, wherein the green pigment and the styrene acrylic polymer are present at a weight ratio of from 1:1 to 10:1.

5. The green ink of claim 1, wherein the styrene acrylic polymer has an acid number from 120 mg/g to 300 mg/g.

6. The green ink of claim 1, further comprising a surfactant, an anti-kogation agent, a biocide, a pH adjuster, or combinations thereof.

7. A method of manufacturing a green ink, comprising:
co-dispersing a green pigment with a styrene acrylic polymer having a weight average molecular weight from 3,000 to 30,000 in a liquid dispersion vehicle including a first organic co-solvent and water to form a pigment dispersion; and
adding the pigment dispersion to an ink vehicle, the ink vehicle comprising a polyurethane having a weight average molecular weight from 15,000 to 120,000, wherein said polyurethane is present in an amount from 3 wt% to 10 wt%, a second organic co-solvent, and water to form a green ink,
wherein the green ink comprises from 1.5 wt% to 6 wt% green pigment.

8. The method of claim 7, wherein the green pigment and the first organic co-solvent are present in the pigment dispersion at a weight ratio from 1:2 to 4:1.

9. The method of claim 7, wherein the green pigment and the styrene acrylic polymer are present in the pigment dispersion at a weight ratio from 1:1 to 10:1.

10. The method of claim 7, wherein the first organic co-solvent and the second organic co-solvent are the same.

11. The method of claim 7, further comprising milling the pigment dispersion prior to adding the pigment dispersion to the ink vehicle.

12. The method of claim 7, further comprising filtering the green ink.

13. An ink set, comprising:
a green ink, including:
from 1.5 wt% to 6 wt% green pigment,
a styrene acrylic polymer having a weight average molecular weight from 3,000 to 30,000,
a polyurethane having a weight average molecular weight from 15,000 to 120,000, wherein said polyurethane is present in an amount from 3 wt% to 10 wt%;
an organic co-solvent, and
from 50 wt% to 90% water;
a cyan ink including a cyan pigment;
a magenta ink including a magenta pigment; and
a yellow ink including a yellow pigment.

14. The ink set of claim 13, wherein a color gamut volume of the ink set is greater than the ink set without the green ink.

## Patentansprüche

1. Grüne Tinte, die Folgendes umfasst:
von 1,5 Gew.-% bis 6 Gew.-% grünes Pigment;
ein Styrol-Acryl-Polymer, das ein gewichtsgemitteltes Molekulargewicht von 3.000 bis 30.000 aufweist;
ein Polyurethan, das ein gewichtsgemitteltes Molekulargewicht von 15.000 bis 120.000 aufweist, wobei das Polyurethan in einer Menge von 3 Gew.-% bis 10 Gew.-% vorhanden ist;
ein organisches Co-Lösungsmittel; und
von 50 Gew.-% bis 90 % Wasser.

2. Grüne Tinte nach Anspruch 1, wobei das grüne Pigment eine durchschnittliche Teilchengröße von 80 nm bis 160 nm aufweist.

3. Grüne Tinte nach Anspruch 1, wobei das grüne Pigment ein Pigmentgrün 7 ist.

4. Grüne Tinte nach Anspruch 1, wobei das grüne Pigment und das Styrol-Acryl-Polymer in einem Gewichtsverhältnis von 1 : 1 bis 10 : 1 vorhanden sind.

5. Grüne Tinte nach Anspruch 1, wobei das Styrol-Acryl-Polymer eine Säurezahl von 120 mg/g bis 300 mg/g aufweist.

6. Grüne Tinte nach Anspruch 1, die ferner ein Tensid, ein Antikogationsmittel, ein Biozid, einen pH-Regler oder Kombinationen davon umfasst.

7. Verfahren zum Herstellen einer grünen Tinte, das Folgendes umfasst:
Co-Dispergieren eines grünen Pigments mit einem Styrol-Acryl-Polymer, das ein gewichtsgemitteltes Molekulargewicht von 3.000 bis 30.000 aufweist, in einer flüssigen Dispersionsträgersubstanz, die ein erstes organisches Co-Lösungsmittel und Wasser einschließt, um eine Pigmentdispersion auszubilden; und
Zugeben der Pigmentdispersion zu einer Tintenträgersubstanz, wobei die Tintenträgersubstanz ein Polyurethan, das ein gewichtsgemitteltes Molekulargewicht von 15.000 bis 120.000 aufweist, wobei das Polyurethan in einer Menge von 3 Gew.-% bis 10 Gew.-% vorhanden ist, ein zweites organisches Co-Lösungsmittel, und Wasser umfasst, um eine grüne Tinte auszubilden,
wobei die grüne Tinte von 1,5 Gew.-% bis 6 Gew.-% grünes Pigment umfasst.

8. Verfahren nach Anspruch 7, wobei das grüne Pigment und das erste organische Co-Lösungsmittel in der Pigmentdispersion in einem Gewichtsverhältnis von 1 : 2 bis 4 : 1 vorhanden sind.

9. Verfahren nach Anspruch 7, wobei das grüne Pigment und das Styrol-Acryl-Polymer in der Pigmentdispersion in einem Gewichtsverhältnis von 1 : 1 bis 10 : 1 vorhanden sind.

10. Verfahren nach Anspruch 7, wobei das erste organische Co-Lösungsmittel und das zweite organische Co-Lösungsmittel gleich sind.

11. Verfahren nach Anspruch 7, das ferner ein Mahlen der Pigmentdispersion vor dem Zugeben der Pigmentdispersion zu der Tintenträgersubstanz umfasst.

12. Verfahren nach Anspruch 7, das ferner ein Filtern der grünen Tinte umfasst.

13. Tintensatz, der Folgendes umfasst:
eine grüne Tinte, die Folgendes einschließt:
von 1,5 Gew.-% bis 6 Gew.-% grünes Pigment,
ein Styrol-Acryl-Polymer, das ein gewichtsgemitteltes Molekulargewicht von 3.000 bis 30.000 aufweist,
ein Polyurethan, das ein gewichtsgemitteltes Molekulargewicht von 15.000 bis 120.000 aufweist, wobei das Polyurethan in einer Menge von 3 Gew.-% bis 10 Gew.-% vorhanden ist;
ein organisches Co-Lösungsmittel, und
von 50 Gew.-% bis 90 % Wasser;
eine cyanfarbene Tinte, die ein cyanfarbenes Pigment einschließt;
eine magentafarbene Tinte, die ein magentafarbenes Pigment einschließt; und
eine gelbe Tinte, die ein gelbes Pigment einschließt.

14. Tintensatz nach Anspruch 13, wobei ein Farbumfangsvolumen des Tintensatzes größer als der Tintensatz ohne die grüne Tinte ist.

## Revendications

1. Encre verte, comprenant :
de 1,5 % en poids à 6 % en poids de pigment vert ;
un polymère acrylique de styrène ayant un poids moléculaire moyen en poids de 3 000 à 30 000 ;
un polyuréthane ayant un poids moléculaire moyen en poids de 15 000 à 120 000, ledit polyuréthane étant présent en une quantité de 3 % en poids à 10 % en poids ;
un cosolvant organique ; et
de 50 % en poids à 90 % d'eau.

2. Encre verte selon la revendication 1, le pigment vert ayant une taille moyenne de particules de 80 nm à 160 nm.

3. Encre verte selon la revendication 1, le pigment vert étant le pigment vert 7.

4. Encre verte selon la revendication 1, le pigment vert et le polymère acrylique de styrène étant présents dans un rapport pondéral de 1:1 à 10:1.

5. Encre verte selon la revendication 1, le polymère acrylique de styrène ayant un indice d'acide de 120 mg/g à 300 mg/g.

6. Encre verte selon la revendication 1, comprenant en outre un tensioactif, un agent anti-kogation, un biocide, un régulateur de pH ou des combinaisons de ceux-ci.

7. Procédé de fabrication d'une encre verte, comprenant :
la co-dispersion d'un pigment vert avec un polymère acrylique de styrène ayant un poids moléculaire moyen en poids de 3 000 à 30 000 dans un véhicule de dispersion liquide comportant un premier cosolvant organique et de l'eau pour former une dispersion de pigment ; et
l'ajout de la dispersion de pigment à un véhicule d'encre, le véhicule d'encre comprenant un polyuréthane ayant un poids moléculaire moyen en poids de 15 000 à 120 000, ledit polyuréthane étant présent en une quantité de 3 % en poids à 10 % en poids, un second cosolvant organique, et de l'eau pour former une encre verte,
l'encre verte comprenant de 1,5 % en poids à 6 % en poids de pigment vert.

8. Procédé selon la revendication 7, le pigment vert et le premier cosolvant organique étant présents dans la dispersion de pigment dans un rapport pondéral de 1:2 à 4:1.

9. Procédé selon la revendication 7, le pigment vert et le polymère acrylique de styrène étant présents dans la dispersion de pigment dans un rapport pondéral de 1:1 à 10:1.

10. Procédé selon la revendication 7, le premier cosolvant organique et le second cosolvant organique étant les mêmes.

11. Procédé selon la revendication 7, comprenant en outre le broyage de la dispersion de pigment avant d'ajouter la dispersion de pigment au véhicule d'encre.

12. Procédé selon la revendication 7, comprenant en outre la filtration de l'encre verte.

13. Ensemble d'encres, comprenant :
une encre verte, comportant :
de 1,5 % en poids à 6 % en poids de pigment vert,
un polymère acrylique styrène ayant un poids moléculaire moyen en poids de 3 000 à 30 000,
un polyuréthane ayant un poids moléculaire moyen en poids de 15 000 à 120 000, ledit polyuréthane étant présent en une quantité de 3 % en poids à 10 % en poids ;
un cosolvant organique, et
de 50 % en poids à 90 % d'eau ;
une encre cyan comportant un pigment cyan ;
une encre magenta comportant un pigment magenta ; et
une encre jaune comportant un pigment jaune.

14. Jeu d'encres selon la revendication 13, un volume de gamme de couleurs de l'ensemble d'encres étant supérieur à celui de l'ensemble d'encres sans l'encre verte.
